(19) Europäisches Patentamt
European Patent Office
Office européen des brevets

(11) **EP 4 633 185 A1**

(12) **EUROPEAN PATENT APPLICATION**

(43) Date of publication:
**15.10.2025 Bulletin 2025/42**

(21) Application number: **25169102.8**

(22) Date of filing: **08.04.2025**

(51) International Patent Classification (IPC):
**H04N 23/76** (2023.01) **H04N 23/84** (2023.01)
**H04N 25/133** (2023.01)

(52) Cooperative Patent Classification (CPC):
**H04N 23/84; H04N 23/76; H04N 25/133;
H04N 25/583; H04N 25/585**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **08.04.2024 AU 2024900973**

(71) Applicant: **Blackmagic Design Pty Ltd
South Melbourne, Victoria 3205 (AU)**

(72) Inventor: **BUETTNER, Carsten
South Melbourne, 3205 (AU)**

(74) Representative: **Mathys & Squire
The Shard
32 London Bridge Street
London SE1 9SG (GB)**

(54) **IMAGE CAPTURE METHOD AND APPARATUS**

(57) There is disclosed a camera having at least one image sensor. The image sensor includes a pixel array with at least three colours of narrowband pixels and wideband pixels. The camera is operable in a first mode in which the image sensor has first gain settings and generates an output having a first response. The camera is also operable in a second mode in which the image sensor has second gain settings and generates an output having second response. The image sensor is configured to generate a digital output in which the wideband pixels have a spectral output response approximately equal to the sum of spectral output responses of the narrowband pixels in the first mode. The image sensor is further configured to generate a digital output in which the wideband pixels have a spectral output response greater than in said first mode when in the second mode.

FIG 1

**FIG. 6**

EP 4 633 185 A1

## Description

## Field

The present disclosure relates to image capture methods and apparatus.

## Background

High dynamic range (HDR) image capture techniques are driving improvements in both digital still imaging and digital video. HDR techniques exploit the ability for pixels of an image sensor to operate with different imaging properties. The output of pixels with different properties can be blended using an algorithm that preserves pixel values or areas of images that are the most correctly exposed. In this context a "property" of a pixel can be an inherent property of the pixel (e.g. different color filter) or a result of its operation (e.g. different integration time) or a result of signal processing (e.g. different pixel gain), which can cause pixels to have differing sensitivity. Some HDR techniques require multiple images to be captured with different sensing parameters applied to some or all pixels of the image sensor, whereas others capture a single image with some pixels having different properties within the single image. A combination of both can also be implemented.

The systems, devices, methods and approaches described in this section, and components thereof are known to the inventors. Therefore, unless otherwise indicated, it should not be assumed that any of such systems, devices, methods, approaches or their components described are citable as prior art merely by virtue of their inclusion in this section, or that such systems, devices, methods, approaches and components would ordinarily be known to a person of ordinary skill in the art.

## Summary

Aspects and embodiments of the present invention are set out in the appended claims. These and other aspects and embodiments of the invention are also described herein.

There is disclosed a camera having at least one image sensor. The image sensor includes a pixel array with at least three colours of narrowband pixels and wideband pixels. The camera is operable in a first mode in which the image sensor has first gain settings and generates an output having a first response. The camera is also operable in a second mode in which the image sensor has second gain settings and generates an output having second response. The image sensor is configured to generate a digital output in which the wideband pixels have a spectral output response approximately equal to the sum of spectral output responses of the narrowband pixels in the first mode. The image sensor is further configured to generate a digital output in which the wideband pixels have a spectral output response greater than in said first mode when in the second mode.

According to a first aspect of the disclosure, there is provided a camera having at least one image sensor, said image sensor including a pixel array with wideband pixels and at least three colours of narrowband pixels; wherein the narrowband pixels and wideband pixels are read out with different gains, and wherein the wideband pixels are read out with a higher gain than the narrowband pixels.

In some embodiments of the camera the narrowband pixels include red pixels, green pixels and blue pixels, wherein the wideband pixels are read out with a gain that is, a factor of H times a gain used for readout of the green pixels.

According to a second aspect of the disclosure, there is provided a camera having a least one image sensor, said image sensor including a pixel array with at least three colours of narrowband pixels and wideband pixels; wherein said camera is: operable in a first mode in which the image sensor has first gain settings and generates an output having a first response, operable in a second mode in which the image sensor has second gain settings and generates an output having second response, wherein the image sensor is further configured: in the first mode to generate a digital output in which the wideband pixels have a spectral output response approximately equal to the sum of spectral output responses of the narrowband pixels; and in the second mode to generate a digital output in which the wideband pixels have a spectral output response greater than in said first mode.

In some embodiments of the camera of the second aspect in the second mode the wideband pixels have a spectral output response approximately equal to, H times the sum of spectral output responses of the narrowband pixels.

According to a third aspect of the disclosure, there is provided a camera having a least one image sensor, said image sensor including a pixel array with at least three colours of narrowband pixels and wideband pixels; wherein said camera is: operable in a first mode in which the image sensor is read out using first analog gain settings, operable in a second mode in which the image sensor is read out using second analog gain settings, wherein during read out in the second mode the relative difference between the analog gain applied to the wideband pixels compared to the narrowband pixels is greater than the relative difference between the analog gain applied to the wideband pixels compared to the narrowband pixels during readout in the first mode.

In some embodiments of the camera of the third aspect in the second mode the analog gain applied to the wideband pixels is greater than the analog gain applied to the wideband pixels in the first mode.

In some embodiments of the camera of the third aspect the analog gain applied to the wideband pixels in the second mode is a factor of H greater than the analog gain applied to the wideband pixels in the first mode.

In some embodiments of the camera of any one of the first, second or third aspect, H is greater than 2.

In some embodiments of the camera of any one of the first, second or third aspect, H is less than 6.

In some embodiments of the camera of any one of the first, second or third aspects, H is between 2.5 and 3.5

In some embodiments of the camera of any one of the first, second or third aspects, H is between 2.8 and 3.

In some embodiments of the camera of any one of the first, second or third aspects, H is about 2.9

According to a fourth aspect of the disclosure, there is provided a camera having a least one image sensor: said image sensor including a pixel array with at least three colours of narrowband pixels and wideband pixels; said image sensor being operable in a normal mode with first gain settings; and said image sensor being operable in a high dynamic range mode with second gain settings in which the wideband pixels are read out with a higher gain than in said normal mode.

In some embodiments of the camera of the fourth aspect in said high dynamic range mode narrowband pixels are read out with a second gain setting different to said normal mode.

In some embodiments of the camera of the fourth aspect in said high dynamic range mode the gain setting used for said wideband pixels is increased relative to the gain settings for at least one of said colours of narrowband pixels by a factor of between 2 and 6.

In some embodiments of the camera of the fourth aspect in said high dynamic range mode the gain setting used for said wideband pixels is increased relative to the gain settings for narrowband pixels with green colour filters by a factor of between 2 and 6.

In some embodiments of the camera of the fourth aspect, the factor is between 2.5 and 3.5.

In some embodiments of the camera of the fourth aspect, the factor is about 2.9.

In some embodiments of the camera of any one of the first, second, third or fourth aspects said gain is analog gain and or said gain setting is an analog gain setting.

In some embodiments of the camera of any one of the first, second, third or fourth aspects said gain is pixel conversion gain and or said gain setting is a pixel conversion gain setting.

In some embodiments of the camera of any one of the first, second, third or fourth aspects the pixel array includes three types of narrowband pixels (T1, T2, T3) and one type of wideband pixels(w).

In some embodiments of the camera of any one of the first, second, third or fourth aspects the pixel array has a unit cell with pixels in the ratio of T1:T2:T3 of 1:1:1

In some embodiments of the camera of any one of the first, second, third or fourth aspects the pixel array has a unit cell comprising the following arrangement of pixels: T1 w T2 w T3 w, w T1 w T2 w T3, T2 w T3 w T1 w, w T2 w T3 w T1, T3 w T1 w T2 w, w T3 w T1 w T2, wherein 'T1' corresponds to a type 1 narrowband pixel, 'w' corresponds to a wideband filter, 'T2' corresponds to a type 2 narrowband pixel and 'T3' corresponds to a type 3 narrowband pixel.

In some embodiments of the camera of any one of the first, second, third or fourth aspects, it is further configured to generate one or both of: narrowband luminance values Y based on an output from said narrowband pixels; and wideband luminance values W based on an output from said wideband pixels.

In some embodiment of the camera of any one of the first, second, third or fourth aspects, it is further configured to process said narrowband luminance values and said wideband luminance values to generate a combine luminance value.

In some embodiments of the camera of any one of the first, second, third or fourth aspects said narrowband luminance values have a saturation value of $Y_{SAT}$; and a wideband luminance values have a saturation value of $W_{SAT}$ wherein $W_{SAT}/Y_{SAT}$ is greater than 3.

In some embodiments of the camera of any one of the first, second, third or fourth aspects, $W_{SAT}/Y_{SAT}$ is greater than 6.

In some embodiments of the camera of any one of the first, second, third or fourth aspects, $W_{SAT}/Y_{SAT}$ is greater than 8.

In some embodiments of the camera of any one of the first, second, third or fourth aspects, $W_{SAT}/Y_{SAT}$ is approximately 9.

In some embodiments of the camera of any one of the first, second, third or fourth aspects, $Y = (T1 + T2 + T3)/3$.

According to a fifth aspect of the disclosure, there is provided a method in a camera having a least one image sensor, said image sensor including a pixel array with at least three colours of narrowband pixels and wideband pixels; the method comprising: reading out the narrowband pixels and wideband pixels with different gains, wherein the wideband pixels are read out with a higher gain than the narrowband pixels.

In some embodiments of the method of the fifth aspect the narrowband pixels include red pixels, green pixels and blue pixels, wherein the method includes: reading out wideband pixels with a gain that is, a factor of H times a gain used for readout of the green pixels.

According to a sixth aspect of the disclosure, there is provided a method performed in a camera having a least one image sensor, said image sensor including a pixel array with at least three colours of narrowband pixels and wideband pixels; said method including: selectively operating the camera in a first mode in which the image sensor has first gain settings and generates an output having a first response, or selectively operating the camera in a second mode in which the image sensor has second gain settings and generates an output having a second response, wherein the method further includes:

generating, in the first mode, a digital output in which the wideband pixels have a spectral output response approximately equal to the sum of spectral output responses of the narrowband pixels; and generating, in the second mode, a digital output in which the wideband pixels have a spectral output response greater than in said first mode.

In some embodiments of the method of the sixth aspect in the second mode the wideband pixels have a spectral output response approximately equal to, H times the sum of spectral output responses of the narrowband pixels.

According to a seventh aspect of the disclosure, there is provided a method performed in camera having a least one image sensor, said image sensor including a pixel array with at least three colours of narrowband pixels and wideband pixels; said method including: selectively operating the camera in a first mode in which the image sensor is read out using first analog gain settings, or selectively operating the camera in a second mode in which the image sensor is read out using second analog gain settings, wherein during read out in the second mode the relative difference between the analog gain applied to the wideband pixels compared to the narrowband pixels is greater than the relative difference between the analog gain applied to the wideband pixels compared to the narrowband pixels during readout in the first mode.

In some embodiments of the method of the seventh aspect in the second mode the analog gain applied to the wideband pixels is greater than the analog gain applied to the wideband pixels in the first mode.

In some embodiments of the method of the seventh aspect the analog gain applied to the wideband pixels in the second mode is a factor of H greater than the analog gain applied to the wideband pixels in the first mode.

In some embodiments the method of the fifth, sixth or seventh aspect, H is greater than 2.

In some embodiments the method of the fifth, sixth or seventh aspect, H is less than 6.

In some embodiments the method of the fifth, sixth or seventh aspect, H is between 2.5 and 3.5.

In some embodiments the method of the fifth, sixth or seventh aspect, H is between 2.8 and 3.

In some embodiments the method of the fifth, sixth or seventh aspect, H is about 2.9.

According to an eighth aspect of the disclosure, there is provided a method performed in a camera having a least one image sensor, said image sensor including a pixel array with at least three colours of narrowband pixels and wideband pixels; the method including: selectively operating in either a normal mode or a high dynamic range mode, said image sensor is operated in normal mode with first gain settings; and said image sensor is operated in said high dynamic range mode with second gain settings in which the wideband pixels are read out with a higher gain than in said normal mode.

In some embodiments of the method of the eighth aspect in said high dynamic range mode narrowband pixels are read out with a second gain setting different to said normal mode.

In some embodiments of the method of the eighth aspect in said high dynamic range mode the gain setting used for said wideband pixels is increased relative to the gain settings for at least one of said colours of narrowband pixels by a factor of between 2 and 6.

In some embodiments of the method of the eighth aspect in said high dynamic range mode the gain setting used for said wideband pixels is increased relative to the gain settings for narrowband pixels with green colour filters by a factor of between 2 and 6.

In some embodiments of the method of the eighth aspect, the factor is between 2.5 and 3.5.

In some embodiments of the method of the eighth aspect, the factor is about 2.9.

In some embodiments of the method according to the fifth, sixth, seventh or eighth aspect said gain is analog gain and or said gain setting is an analog gain setting.

In some embodiments of the method according to the fifth, sixth, seventh or eighth aspect said gain is pixel conversion gain and or said gain setting is a pixel conversion gain setting.

In some embodiments of the method according to the fifth, sixth, seventh or eighth aspect, the method further includes: generating one or both of: narrowband luminance values Y based on an output from said narrowband pixels; and wideband luminance values W based on an output from said wideband pixels.

In some embodiments of the method according to the fifth, sixth, seventh or eighth aspect, the method further includes: processing said narrowband luminance values and said wideband luminance values to generate a combined luminance value.

In some embodiments of the method according to the fifth, sixth, seventh or eighth aspect, said narrowband luminance values have a saturation value of $Y_{SAT}$; and a wideband luminance values have a saturation value of $W_{SAT}$ wherein $W_{SAT}/Y_{SAT}$ is greater than 3.

In some embodiments of the method according to the fifth, sixth, seventh or eighth aspect, $W_{SAT}/Y_{SAT}$ is greater than 6.

In some embodiments of the method according to the fifth, sixth, seventh or eighth aspect, $W_{SAT}/Y_{SAT}$ is greater than 8.

In some embodiments of the method according to the fifth, sixth, seventh or eighth aspect, $W_{SAT}/Y_{SAT}$ is approximately 9.

According to a ninth aspect of the disclosure, there is provided a method according to any one of aspects five to eight wherein the camera is a camera according to any one of aspects one to four.

While the invention(s) disclosed herein are amenable to various modifications and alternative forms, specific embodiments are shown by way of example in the drawings and are described in detail. It should be understood, however, that the drawings and detailed description are not intended to limit the invention(s) to the particular form disclosed. Furthermore, all alternative combinations of two or more of the individual features mentioned or evident from the text or drawings comprise additional aspects or inventive disclosures, which may form the subject of claims.

The disclosure also provides computer programs and computer program products comprising software code adapted, when executed on a data processing apparatus, to perform any of the methods and/or for embodying any of the apparatus and system features described herein, including any or all of the component steps of any method.

The disclosure also provides a computer or computing system (including networked or distributed systems) having an operating system which supports a computer program for carrying out any of the methods described herein and/or for embodying any of the apparatus or system features described herein.

The disclosure also provides a computer readable media having stored thereon any one or more of the computer programs aforesaid.

The disclosure extends to methods, system and apparatus substantially as herein described and/or as illustrated with reference to the accompanying figures.

The disclosure also provides a signal embodying a computer program or a computer program product for carrying out any of the methods described herein, and/or for embodying any of the apparatus features described herein, a method of transmitting such a signal, and a computer product having an operating system which supports a computer program for carrying out the methods described herein and/or for embodying any of the apparatus features described herein.

Any feature in one aspect of the disclosure may be applied to other aspects of the invention, in any appropriate combination. In particular, method aspects may be applied to apparatus aspects, and vice versa. As used herein, means plus function features may be expressed alternatively in terms of their corresponding structure, such as a suitably programmed processor and associated memory.

Furthermore, features implanted in hardware may generally be implemented in software, and vice versa. Any reference to software and hardware features herein should be construed accordingly.

It should also be appreciated that particular combinations of the various features described and defined in any aspects of the disclosure can be implemented and/or supplied and/or used independently.

**Brief description of the Drawings**

Figure 1 illustrates the analog response of the R, G, B and wideband pixels in an image sensor with an RGBW color filter array.

Figure 2 illustrates the analog response of the R, G, B and wideband pixels in an image sensor with an RGBW color filter array operating in a second mode according to an embodiment of the present disclosure.

Figures 3 and 3B illustrate the spectral response of R, G, B and wideband pixels in an image sensor with an RGBW color filter array adapted for using an embodiment of the disclosure.

Figure 4 and 3B illustrate an exemplary spectral response of the sensor of figure 4 operating in a second mode according to an embodiment of the disclosure.

Figures 5 to 5C illustrate details of an RGBW color filter array adapted for using an embodiment of the disclosure.

Figure 6 is a schematic block diagram of a camera of an embodiment.

**Detailed description**

In the following description numerous specific details are set forth in order to provide a thorough understanding of the present invention. These should be read in combination with the summary provided herein above and together with the accompanying figures. It will be apparent, however, that the present invention may be practiced without these specific details. In some instances, well-known structures and devices are shown in block diagram form in order to avoid unnecessary obfuscation of salient details.

Conversion gain HDR systems use at least two different analog gains (e.g. pixel conversion gain) at the image sensor to improve dynamic range. Each pixel of an imaging sensor comprises one or more photodiodes that convert light into electrical charge. As each pixel is read out, the accumulated charge in the pixel is converted to a voltage signal that is then measured and digitised to generate a value for the pixel. The pixel conversion gain of a pixel is effectively a measure of the ratio of the change in accumulated charge caused by a photon incident on the pixel, to the change in the voltage signal read out. Pixel circuits can be designed to have high pixel conversion gain to improve the pixel sensitivity under low-light conditions. However, if the lighting conditions are too bright, the photodiode will accumulate too much charge and reach saturation. Pixels with low conversion gain do not saturate as easily so are suited to high brightness situations, but are less sensitive and may not provide sufficient detail at low light conditions. Devices employing conversion gain HDR exploit these different properties to increase dynamic range. Such devices may: change the pixel conversion gain based on the light level so that it is optimised; and employ different pixel conversion gains for different pixels, so that some pixels have low conversion gain and are thus optimised for high illumination conditions without saturation, while some pixels have high conversion gain so as to optimise performance in low illumination conditions where saturation is unlikely.

Conventional techniques use these conventional gain changes or selections to optimise image capture of different pixel types to avoid saturation of the image sensor. Counterintuitively the present inventor has determined that it is useful in some circumstances to use conversion gain HDR techniques without this emphasis.

The applicant's patent US 11,258,992 B2 (Buettner), the contents of which are herein incorporated by cross reference for all purposes, describes an image sensor with a color filter array that includes a pattern of wideband pixels and at least two (typically three) types of narrowband pixels. Using such a filter array it is possible to generate multiple luminance images that are adapted for use at different light levels. A first luminance image can be created by combining only the narrowband pixel values to create a first luminance image Y, and alternatively (or additionally) creating a second luminance image W that uses only the wideband pixels. Generally speaking the first luminance image is better adapted to use in bright lighting conditions as the colour pixels that are used to create it are less likely to saturate, whereas the second luminance image is better adapted for use in low lighting conditions as the wideband pixels that are used to create capture more light in low light conditions. These two luminance representations can also be blended according to a combination algorithm into a single luminance image.

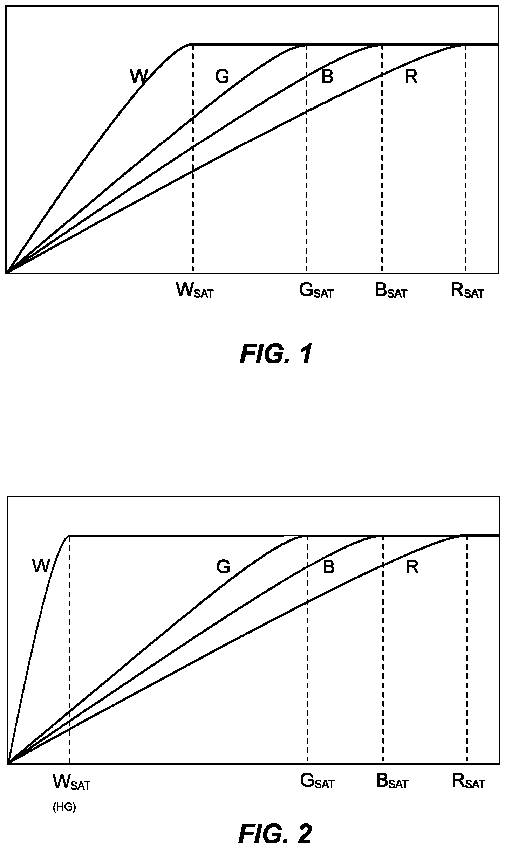

Figure 1 illustrates the analog response of the R, G, B and wideband pixels and illustrates the behaviour of such pixels under illumination of daylight or daylight simulated with white LEDs (or similar). Each plot shows the analog light response for one of the wideband (W), green (G), blue (B) and red (R) pixels respectively. The vertical axis shows pixel output and the horizontal axis shows light level. The wideband pixel response increases from zero and rises most rapidly until it saturates at $W_{SAT}$. Each other pixel type follows a generally similar response pattern, but saturates at its own saturation level $G_{SAT}$ for green $B_{SAT}$ for blue and $R_{SAT}$ for red. As can be seen this means that the wideband pixel is most sensitive, but saturates earlier than the others.

As will be appreciated a typical image sensor with a color filter array (CFA) will have pixels arranged in repeating unit cells of pixels with different color filters (i.e. different colour filters). The following examples will assume an image sensor with a unit cell with narrowband pixels in the ratio of T1:T2:T3 of 1:1:1, where wherein 'T1' corresponds to a type 1 narrowband pixel, 'T2' corresponds to a type 2 narrowband pixel and 'T3' corresponds to a type 3 narrowband pixel. However the present disclosure should be considered to be applicable, mutatis mutandis, to other unit cells.

One example of such a unit cell includes red, green and blue pixels and wideband pixels. In this example Luminance Y can be calculated as Y=(R+G+B)/3. It follows that saturation of the luminance output occurs at:

$$Y_{SAT} = (R_{SAT} + B_{SAT} + G_{SAT})/3.$$

Because the wideband pixels effectively have no color selectivity over the spectral range of the R, G, B pixels, the wideband image can be considered to represent a second luminance value W. When the narrowband luminance saturation $Y_{SAT}$ point is compared to the saturation point of the wideband output $W_{SAT}$, the dynamic range extension provided by the inclusion of W pixels in normal operation can be seen, and is represented by $Y_{SAT}/W_{SAT}$.

In an embodiment of the present disclosure, illustrated in Figure 2, the response of the sensor is modified to provide a further increased dynamic range. This is achieved in one embodiment by increasing the gain applied to the wideband pixels relative to that applied to the narrowband pixels. It is easiest to consider the case where the gain applied to the narrowband pixels is held fixed and only the gain applied to the wideband pixels is modified. However the gain applied to the narrowband pixels may not be held fixed. Figure 2 illustrates an analog response of the R, G, B and wideband pixels in one embodiment of high dynamic range mode of operation, and illustrates the behaviour of such pixels under illumination of daylight or daylight simulated with white LEDs (or similar). Each plot shows the analog light response for one of the wideband (W), green (G), blue (B) and red (R) pixels, respectively. As can be seen, the wideband pixel response increases from zero and rises most rapidly until it saturates at $W_{SAT}$. Each other pixel type follows a generally similar response pattern, but saturates at its own saturation level $G_{SAT}$ for green $B_{SAT}$ for blue and $R_{SAT}$ for red. In this second, high dynamic range mode of operation, in which the wideband pixels have a relatively higher gain it can be seen that $W_{SAT}$ occurs at a lower light level than in Figure 1, and significantly lower than the saturation point of the narrowband pixels. If the gain of the wideband pixels has been increased by a factor of "H" the saturation point is shifted downward by 1/H (i.e. it occurs at 1/H the light level of the normal mode). So $W_{HG.} = W_{SAT}/H$.

Considering the same exemplary CFA arrangement this provides that:

$$\text{Dynamic range (high gain)} = Y_{SAT} / (W_{SAT}/H)$$

$$= H * Y_{SAT} / W_{SAT}$$

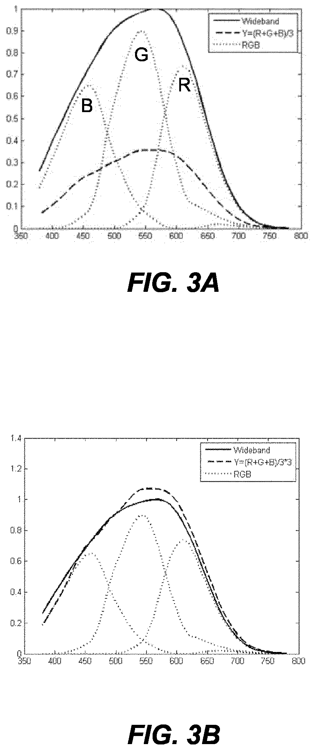

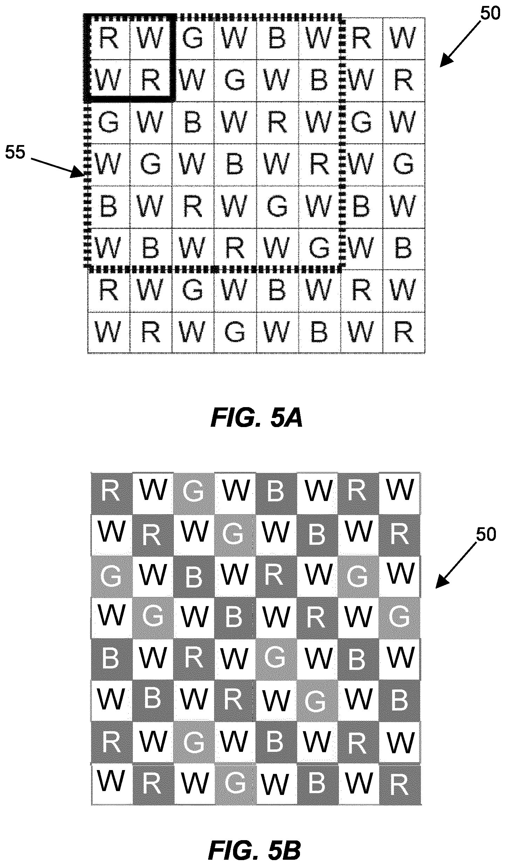

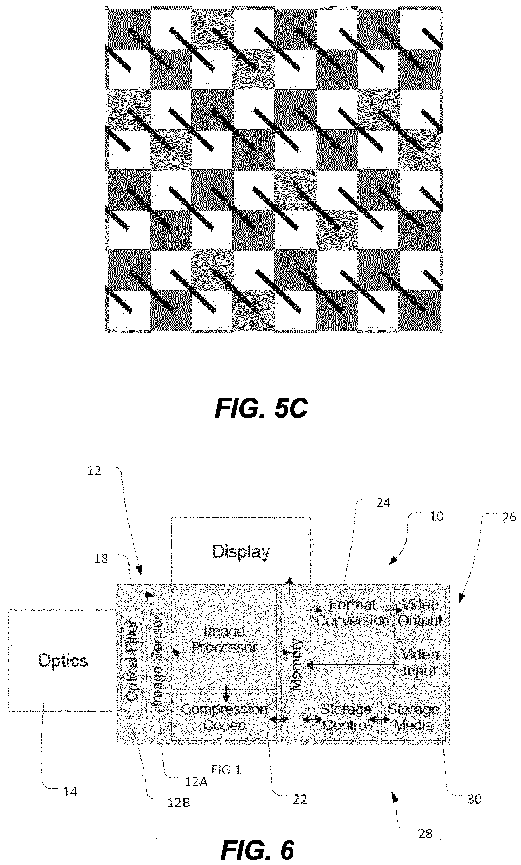

Figure 3 reproduces part of Figure 5 of US 11,258,992 B2, which shows the spectral sensitivity of an image sensor with a CFA of three narrowband pixel colors (red, green and blue) and one wideband pixel type (Mono). The diagram shows the spectral sensitivity of each of the B, G, and R pixels in dotted lines (following the peaks from left to right), and the spectral sensitivity of the Wideband pixels (Mono) in solid line . The plots assume that an infra-red cut-off filter is also present. As will be appreciated, the response of the image sensor illustrated is thus a combination of the response of the sensor's pixels as well as the filtering effect of the corresponding pixel of the CFA, and possibly other pixels such as an IR cut-off filter. As can be seen, the peak response for pixels corresponding to a wideband filter is centered about the combined spectral response of the pixels with R, G, B filters, and the wideband pixel (solid line) has a sensitivity that generally matches that of the sum of the narrowband pixels. All values are normalized to the peak sensitivity of the wideband pixels to aid comparison. These plots represent the pixel spectral output response in the digital domain and thus include the effect of both analog amplification such as pixel conversion gain applied during pixel readout, as well as subsequent digital gain that may be applied to the R, G, B and W sensor outputs. In this regard to achieve a reasonably close match between the mono (wideband) and the combined R, G, and B spectral responses it may be necessary to have different digital gain on different channels to balance the spectral response levels.

In addition to the pixels' spectral responses, Figure 3 also shows a Luminance sensitivity Y (dashed line) of a sensor having equal numbers of R, G and B pixels as described above. As can be seen the narrowband luminance Y is approximately 1/3 of the value of the wideband value W (which equates to a wideband luminance value) over the whole spectral range of the sensor. Figure 3B (which reproduces a plot from Figure 5 of US 11,258,992 B2) shows the same data as Figure 3, but illustrates the luminance value Y scaled by a factor of three to assist in visualising an acceptable level of matching between the W pixels and combined spectral response of the pixels with R, G, B filters in one embodiment.

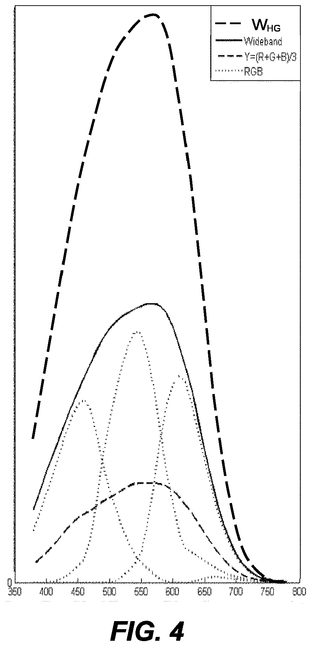

Figure 4 provides a further addition to Figure 3, and additionally shows a plot (dash-dot-dot line) of the wideband pixels' spectral response output in the second, high dynamic range mode described in Figure 2. In this mode the $W_{HG}$ output is now significantly higher than the W output response in the first mode across the whole spectral range of the W pixels. Assuming there has also been no change in digital gain, $W_{HG}$ is a factor of H higher than W, and a factor of approximately 3H higher than Y.

Figure 5 is a schematic representation of a two-dimensional array pixels 50 with color and wideband filters, having a unit cell 55 with pixels in the ratio of T1:T2:T3 of 1:1:1, which may be used in a system and method as described herein. The unit cell 55 is a 6×6 pixel pattern that repeats over the whole filter array. Narrowband filters are labelled "R", "G", "B", and represent filters with passbands centered on red, green, and blue, respectively and the "W" pixels are wideband pixels with a passband, and may produce a spectral output as discussed in relation to Figure 3. Figure 5B shows a colour representation of the sensor array to assist in visualisation. In this embodiment there is one "W" pixel for each narrowband pixel.

A further advantage of the embodiments of Figure 5 is that it can be operated in binning mode, which can advantageously increase sensitivity and readout speed. As can be seen in Figure 5C, the pixels of the sensor can be divided into pairs of wideband filter elements (W) and a pair of narrowband filter elements of the same type. Such pairs are indicated by linked diagonal lines. In binning mode, the readout of the pairs of pixels occurs together and the pixel values combined. This binning mode is also amendable to use in both normal and high dynamic range mode as described herein, as the pairs of pixels share the same gain as each other during readout. Advantageously, since only half the total number of pixel responses needs to be read out from the image sensor, it may be possible to achieve double the frame rate, while maintaining the same field of view compared to full readout mode of all individual pixels.

Figures 7 and 8 of US 11,258,992 B2 diagrammatically show an exemplary method of creating narrowband luminance images from the narrowband pixels, as well as wideband luminance images from wideband pixels of RGBW sensor element. For example, Figure 8 describes a process that may be used with the pixel array of Figures 5 to 5C herein. These techniques are broadly applicable to cameras operating in either of the high dynamic range mode, or normal dynamic range mode of the present disclosure.

Embodiments of the present disclosure enable the generation of two luminance outputs (e.g. two luminance images) - one created from narrowband pixels and one created from wideband pixels, which have different absolute sensitivity. These may optionally have matching spectral sensitivity profiles.

Blending these two luminance outputs in the normal operation mode enables a relatively high dynamic range to be achieved, as the luminance output W from the wideband pixels can be favoured in darker situations (e.g. lighting conditions, parts of scenes etc.), and the luminance output from Y the narrowband pixels can be favoured in brighter situations. In high dynamic range mode the sensitivity difference between the wideband pixels and narrowband pixels can be increased by increasing the gain applied to the wideband pixels' output relative to the narrowband pixels. Blending the resulting two luminance outputs in the high dynamic range mode thus enables an even higher dynamic range to be achieved as the luminance output WHG from the wideband pixels can be favoured in darker situations (e.g. lighting conditions, parts of scenes etc.), and the luminance output from Y the narrowband pixels can be favoured in brighter situations.

Figure 6 is a schematic representation of a camera 10 capable of implementing a method according to the present disclosure. The camera 10 includes an image capture system 12 configured to convert received light into raw image data. In this example, the image capture system 12 includes an image sensor 12A (e.g., a CCD or CMOS image sensing chip or similar) and an associated optical filter 12B (e.g., an IR cut-off filter or an optical low pass filter). An optical system 14, e.g., lens is also provided to form images on the image sensor. The image sensor includes a CFA, in the form of a spatial array of filters, placed in front of the image sensor chip to enable capture of images made up of an array of pixels at different positions from which a color image can be generated. The filters of the CFA are spatially correlated with photosites of the image sensor, so that each photosite has a corresponding spectrally selective filter. In the present disclosure a pixel generated by a photosite with a given filter in the CFA will be named by reference to that filter. That is, a pixel generated by a photosite with a "green" colour filter will be called a green pixel. Example filter arrays suitable for use with the camera of Figure 6 are illustrated in Figures 5 to 5C.

The sensor raw video data that is generated by the image capture system 12 is passed to the image processing subsystem 18. In embodiments of the present disclosure, sensor gain can be changed or set in the image capture system 12 to enable operation in either first, normal mode, or in a second, high dynamic range mode. This can be achieved either by changing the analog gain applied during pixel readout, or by modifying a digital gain of the sensor output. In the preferred embodiment the pixel conversion gain is modified to change between modes.

The image processing subsystem 18 may comprise one or more data processors, such as an ASIC or FPGA or microprocessor with associated software, and is configured to perform a range of image processing tasks. These tasks can include but are not limited to: correction of unwanted optical effects such as pincushion distortion or others, demosaicing, noise reduction, correction of pixel-to-pixel variations in captured video data, e.g., by removing dead pixels and correcting for conversion efficiency variations. Working memory 20 is provided to enable temporary storage of data or software or the like during image processing and or image compression and other tasks.

The image processing subsystem 18 also includes a video encoding system 22. The video encoding system 22 will typically be implemented by providing software configured to enable a processor to implement one or more video codecs. This system can be used to encode and optionally compress the video data into a desired format.

The image processing subsystem 18 may also include a format conversion system 24 which processes video output data into a format that is able to be transmitted over a video transmission system 26. The video transmission system 26 is generally configured to only transmit video data which complies with one or possibly several video transmission protocols. The format conversion system 24 is provided to format the video data into one of said video transmission formats to enable transmission, before being passed to the video transmission system 26. This can include transcoding video data from its original format into (one of) an appropriate video transmission format of the video transmission system 26. The video transmission system is operable to transmit (and optionally receive) video output data via a video interface having at least a video output port. The video interface can be bi-directional and thus also include a video input port. As an example, the video interface could be an SDI interface or other like interface.

The camera also includes a data storage system in the form of a memory control subsystem 28 which is configured to control persistent storage of video data (and any other data) on a local non-volatile memory 30. The local memory 30 may use a removable memory such as a memory card or removable hard drive. However, in the general case, the memory control subsystem 28 is arranged to transmit and/or receive control signals to/-from the local memory 30 to control storage and retrieval of video data on the memory 30 and also to perform any encoding or formatting of data for storage. The memory 30 could be a solid state drive operating according to the Serial ATA protocol, in which case the memory control subsystem will operate to control operation of the SATA drive and manage reading and writing of data to it.

Any definitions expressly provided herein for terms contained in the appended claims shall govern the meaning of those terms as used in the claims. No limitation, element, property, feature, advantage or attribute that is not expressly recited in a claim should limit the scope of the claim in any way.

As used herein the terms "include" and "comprise" (and variations of those terms, such as "including", "includes", "comprising", "comprises", "comprised" and the like) are intended to be inclusive and are not intended to exclude further features, components, integers or steps.

For aspects of the disclosure that have been described using flowcharts, a given flowchart step could potentially be performed in various ways and by various devices, systems or system modules. A given flowchart step could be divided into multiple steps and/or multiple flowchart steps could be combined into a single step, unless the contrary is specifically noted as essential. Furthermore, the order of the steps can be changed without departing from the scope of the present disclosure, unless the contrary is specifically noted as essential.

It will be understood that the present invention has been described above purely by way of example, and modifications of detail can be made within the scope of the invention.

Reference numerals appearing in the claims are by way of illustration only and shall have no limiting effect on the scope of the claims.

**Claims**

1. A method in a camera having at least one image sensor, said image sensor including a pixel array with at least three colours of narrowband pixels and wideband pixels; the method comprising:
   reading out the narrowband pixels and wideband pixels with different gains, wherein the wideband pixels are read out with a higher gain than the narrowband pixels.

2. A method as claimed in claim 1 wherein the narrowband pixels include red pixels, green pixels and blue pixels, wherein the method includes:
   reading out wideband pixels with a gain that is, a factor of H times a gain used for readout of the green pixels.

3. A method as claimed in either of claims 1 or 2 wherein said method includes:

   selectively operating the camera in a first mode in which the image sensor has first gain settings and generates an output having a first response, or in a second mode in which the image sensor has second gain settings and generates an output having a second response; and
   generating, in the first mode, a digital output in which the wideband pixels have a spectral output response approximately equal to the sum of spectral output responses of the narrowband pixels; and
   generating, in the second mode, a digital output in which the wideband pixels have a spectral output response greater than in said first mode.

4. A method of claim 3 wherein in the second mode the wideband pixels have a spectral output response approximately equal to, H times the sum of spectral output responses of the narrowband pixels.

5. The method of claim 3 in which a gain applied to the wideband pixels in the second mode is a factor of H greater than a gain applied to the wideband pixels in the first mode.

6. The method of any one of claims 2, 4 or 5 wherein H is one or more of:

   greater than 2;
   less than 6;
   between 2.5 and 3.5;

   between 2.8 and 3;
   about 2.9.

7. The method of any one of claims 1 to 6 wherein said gain is analog gain.

8. The method of any one of claims 1 to 6 wherein said gain is pixel conversion gain.

9. The method as claimed in any one of claims 1 to 8 which is further includes:
   generating one or both of:

   narrowband luminance values Y based on an output from said narrowband pixels; and
   wideband luminance values W based on an output from said wideband pixels.

10. The method as claimed in any one of claims 1 to 9 which further includes:
    processing said narrowband luminance values and said wideband luminance values to generate a combined luminance value.

11. The method as claimed in any one of claims 9 or 10 wherein said narrowband luminance values have a saturation value of $Y_{SAT}$; and a wideband luminance values have a saturation value of $W_{SAT}$ wherein $W_{SAT}/Y_{SAT}$ is greater than 3.

12. The method of claim 11 wherein $W_{SAT}/Y_{SAT}$ is greater than 6, or greater than 8 or approximately 9.

13. A camera configured to perform a method as claimed in any one of claims 1 to 12.

14. The camera of any one of the preceding claims wherein the pixel array includes three types of narrowband pixels (T1, T2, T3) and one type of wideband pixels(w).

15. The camera of claim 14 wherein the pixel array has a unit cell with pixels in the ratio of T1:T2:T3 of 1:1:1

**FIG. 1**

**FIG. 2**

**FIG. 3A**

**FIG. 3B**

**FIG. 4**

**FIG. 5A**

**FIG. 5B**

**FIG. 5C**

**FIG. 6**

| | Europäisches Patentamt European Patent Office Office européen des brevets | **EUROPEAN SEARCH REPORT** | **Application Number** EP 25 16 9102 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/385389 A1 (LEE JEONGGUK [KR] ET AL) 9 December 2021 (2021-12-09) | 1-3,7,8, 13,14 | INV. H04N23/76 |
| Y | * paragraph [0031] - paragraph [0049]; figures 3,11 * | 4-6, 9-12,15 | H04N23/84 H04N25/133 |
| | ----- | | |
| Y,D | US 2022/141429 A1 (BUETTNER CARSTEN [AU]) 5 May 2022 (2022-05-05) * paragraph [0075] - paragraph [0080]; figure 5 * | 4-6, 9-12,15 | |
| | ----- | | |
| X | US 9 467 632 B1 (CHEN PO-CHANG [TW] ET AL) 11 October 2016 (2016-10-11) | 1,2,7,8, 13,14 | |
| A | * column 8, line 30 - column 9, line 6; figures 4,8 * | 3-6,9-12 | |
| | ----- | | |
| A | US 2022/053150 A1 (JEONG SOYOUNG [KR] ET AL) 17 February 2022 (2022-02-17) * paragraph [0068] - paragraph [0071]; figure 2B * | 1-15 | |
| | ----- | | |

**TECHNICAL FIELDS SEARCHED (IPC)**

H04N

The present search report has been drawn up for all claims

| Place of search | Date of completion of the search | Examiner |
|---|---|---|
| Munich | 30 July 2025 | Bakstein, Hynek |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

       .....................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 16 9102

This annex lists the patent family members relating to the patent documents cited in the above-mentioned European search report.
The members are as contained in the European Patent Office EDP file on
The European Patent Office is in no way liable for these particulars which are merely given for the purpose of information.

30-07-2025

| Patent document cited in search report | Publication date | Patent family member(s) | | Publication date |
|---|---|---|---|---|
| US 2021385389 A1 | 09-12-2021 | CN | 113766153 A | 07-12-2021 |
| | | DE | 102021113883 A1 | 09-12-2021 |
| | | US | 2021385389 A1 | 09-12-2021 |
| US 2022141429 A1 | 05-05-2022 | CN | 110324546 A | 11-10-2019 |
| | | CN | 116744094 A | 12-09-2023 |
| | | EP | 3547680 A1 | 02-10-2019 |
| | | JP | 7349806 B2 | 25-09-2023 |
| | | JP | 2019208201 A | 05-12-2019 |
| | | JP | 2023166546 A | 21-11-2023 |
| | | US | 2019306472 A1 | 03-10-2019 |
| | | US | 2022141429 A1 | 05-05-2022 |
| | | US | 2023254597 A1 | 10-08-2023 |
| US 9467632 B1 | 11-10-2016 | TW | 201703508 A | 16-01-2017 |
| | | US | 9467632 B1 | 11-10-2016 |
| US 2022053150 A1 | 17-02-2022 | CN | 114079762 A | 22-02-2022 |
| | | KR | 20220020457 A | 21-02-2022 |
| | | US | 2022053150 A1 | 17-02-2022 |

EPO FORM P0459

For more details about this annex : see Official Journal of the European Patent Office, No. 12/82

**EP 4 633 185 A1**

**REFERENCES CITED IN THE DESCRIPTION**

**Patent documents cited in the description**

- US 11258992 B2, Buettner